(19) Europäisches Patentamt / European Patent Office / Office européen des brevets

(11) EP 4 166 212 A1

(12) EUROPÄISCHE PATENTANMELDUNG

(43) Veröffentlichungstag: **19.04.2023 Patentblatt 2023/16**

(21) Anmeldenummer: **21203256.9**

(22) Anmeldetag: **18.10.2021**

(51) Internationale Patentklassifikation (IPC): ***B01D 11/04*** *(2006.01)*

(52) Gemeinsame Patentklassifikation (CPC): **B01D 11/0484; B01D 11/0488;** B01D 11/0457

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Metrohm AG**
**9100 Herisau (CH)**

(72) Erfinder:
- **SCHÖNENBERGER, Gerhard**
**5000 Aarau (CH)**
- **FROST, Volker Jörg**
**8404 Winterthur (CH)**

(74) Vertreter: **Hepp Wenger Ryffel AG**
**Friedtalweg 5**
**9500 Wil (CH)**

# (54) VERFAHREN ZUR AUTOMATISIERTEN FLÜSSIG-FLÜSSIG-EXTRAKTION

(57) Die Erfindung betrifft ein Verfahren zur automatisierten Flüssig-Flüssig-Extraktion. Das Verfahren umfasst die Schritte:
i) Bereitstellen eines Extraktionsgeräts,
ii) Bereitstellen eines Gefässes mit einer hydrophilen Phase und einer hydrophoben Phase, wobei mindestens ein zu extrahierender Bestandteil in einer der beiden Phasen enthalten ist,
iii) Ermitteln eines Leitfähigkeitsunterschieds $\Delta L_{ist}$ zwischen der hydrophilen Phase und der hydrophoben Phase mittels eines Leitfähigkeitssensors.

Eine Absaugung der oberen Phase erfolgt mit mindestens zwei unterschiedlichen Geschwindigkeiten $v_1$ bis $v_n$, wobei die letzte Geschwindigkeit $v_n$ langsamer ist als eine vorangegangene Geschwindigkeit $v_{n-1}$, vorzugsweise langsamer als $v_1$ bis $v_{n-1}$.

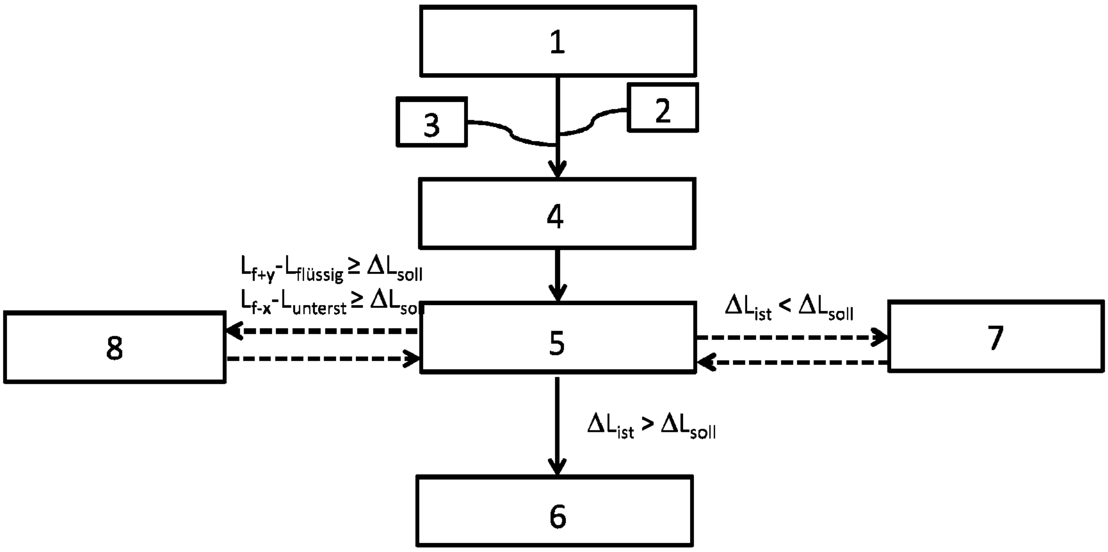


Fig. 1

EP 4 166 212 A1

## Beschreibung

Die Erfindung betrifft ein Verfahren zur automatisierten Flüssig-Flüssig-Extraktion, ein Extraktionsgerät zur Durchführung eines solchen Verfahrens und ein Computerprogramm gemäss den Oberbegriffen der unabhängigen Ansprüche.

Bei einer Extraktion werden Komponenten aus einem bestimmten Stoffgemisch unter Verwendung eines selektiven Lösungsmittels herausgelöst. Bei einer Flüssig-Flüssig-Extraktion liegt sowohl das Stoffgemisch als auch das Lösungsmittel in flüssiger Form vor und mindestens ein zu extrahierender Bestandteil aus dem Stoffgemisch wird mittels Lösungsmittel aus dem Gemisch herausgelöst. Das Lösungsmittel sollte eine ähnliche Polarität wie der zu extrahierende Bestandteil haben und einen ausreichenden Dichteunterschied zum Stoffgemisch bzw. Extraktionsgut. In der Regel sind mehrere Extraktionsschritte nötig, um eine erschöpfende Extraktion zu gewährleisten. Manuell ausgeführte Extraktionen sind daher langwierig und zudem sehr fehleranfällig. Die Reproduzierbarkeit ist nicht immer gegeben.

Automatisierte Extraktionsverfahren finden zunehmend Einzug in Analysenlabore. Hier liegt der Schwerpunkt vor allem auf der Extraktion zu analysierender Substanzen, oft in nur kleinen Mengen. Besondere Anforderungen an erschöpfende Extraktionen werden daher nicht gestellt.

Schwieriger gestaltet sich die Situation für die Extraktion von Bestandteilen aus Synthesen oder bei grossvolumigen Analysenproben, wie zum Beispiel in der Abwasseranalytik, die zum einen möglichst quantitativ erfolgen müssen, reproduzierbar sein müssen und ein genaues Arbeiten erfordern und zum anderen grössere Volumina als bisher bekannte Extraktionsautomaten verwenden. Des Weiteren fehlt es im Stand der Technik an Extraktionsautomaten, die typische Probleme, welche bei einer Extraktion auftreten können, automatisiert beheben können.

Es ist daher zumindest eine Aufgabe der vorliegenden Erfindung, die Nachteile des Stands der Technik zu beheben. Es ist insbesondere eine Aufgabe der Erfindung eine automatisierte Flüssig-Flüssig-Extraktion für Synthesen und somit auch grössere Volumina zur Verfügung zu stellen. Des Weiteren ist es eine Aufgabe der Erfindung, ein automatisiertes Extraktionsverfahren bereitzustellen, welches typische Probleme einer Flüssig-Flüssig-Extraktion automatisiert beheben kann.

Die Aufgaben werden durch die in den unabhängigen Ansprüchen definierten Gegenstände gelöst. Besondere Ausführungsformen finden sich in den abhängigen Ansprüchen.

Ein erster Aspekt der Erfindung betrifft ein Verfahren zur automatisierten Flüssig-Flüssig-Extraktion. Das Verfahren umfasst die Schritte:

i) Bereitstellen eines Extraktionsgeräts,

ii) Bereitstellen eines Gefässes mit einer hydrophilen Phase und einer hydrophoben Phase, wobei mindestens ein zu extrahierender Bestandteil in einer der beiden Phasen enthalten ist,

iii) Ermitteln eines Leitfähigkeitsunterschieds $\Delta L_{ist}$ zwischen der hydrophilen Phase und der hydrophoben Phase mittels eines Leitfähigkeitssensors.

Eine Absaugung der oberen Phase erfolgt mit mindestens zwei unterschiedlichen Geschwindigkeiten $v_1$ bis $v_n$, wobei die letzte Geschwindigkeit $v_n$ langsamer ist als eine vorangegangene Geschwindigkeit $v_{n-1}$, vorzugsweise langsamer als $v_1$ bis $v_{n-1}$.

Das Absaugen in mindestens zwei Geschwindigkeiten mit einer letzten Geschwindigkeit langsamer als die vorangegangene Geschwindigkeit ermöglicht ein besonders behutsames Absaugen im Bereich der Phasengrenze und verhindert, dass Flüssigkeit aus der unteren Phase mit aufgesaugt wird.

Die automatische Flüssig-Flüssig-Extraktion ist besonders gut für grössere Volumina geeignet, wie sie beispielsweise bei organischen Synthesen oder bei der Probenvorbereitung, zum Beispiel in der Abwasseranalytik, vorkommen. So können Probenvolumen von 10 ml bis 200 ml mit je 10 ml bis ca. 70 ml Extraktionslösungsmittel extrahiert werden.

Die hydrophile Phase kann eine anorganische Phase, vorzugsweise eine wässrige Phase, sein und die hydrophobe Phase kann eine organische Phase sein. Besonders bevorzugt weist die organische Phase eine geringere Dichte als die anorganische Phase auf und bildet nach Extraktion die obere Phase. Die anorganische Phase bildet bevorzugt die untere Phase.

Beispielsweise kann die hydrophile Phase oder die hydrophobe Phase aus einem Probenvolumen einer organischen Synthese stammen. Vorzugsweise werden zwischen Schritt i) und ii) die typischen Schritte einer Extraktion durchgeführt. So kann zunächst das Probenvolumen als eine erste Phase vorgelegt werden, ein Extraktionsmittel in Form einer Phase entgegengesetzter Polarität hinzugefügt werden, ein Mischen durch Schütteln oder Rühren, wobei Rühren bevorzugt ist, der Phasen erfolgen und anschliessend eine Ruhezeit zur Phasentrennung ermöglicht werden.

Es ist zudem möglich eine theoretische Höhe der Phasengrenze zu ermitteln. Beispielsweise kann dies mittels des Probenvolumens aus der Synthese oder einem vorgelegten Startvolumen oder einem vorgängig durchgeführten Leitfähigkeitsscan, welche mittels Software ein- und ausgeschaltet werden kann, erfolgen. Anschliessend kann das Extraktionsmittel, optional eine Verdünnung und optional ein Extraktionshilfsmittel hinzugefügt werden und der Inhalt des Gefässes mittels Rührens gemischt werden und eine Trennzeit abgewartet werden. Die Rührzeit, oder auch alternativ eine Schüttelzeit, können über eine Software bzw. Computerprogramm einstellbar sein. Software und Computerprogramm sind im Sinne der vorliegenden Erfindung gleichbedeutend.

Vorteilhafterweise wird der Leitfähigkeitssensor derart durch die Phasen geführt wird, dass ermittelte Leitfähigkeiten $L_1$ bis $L_n$ mit Höhen des Sensors $H_1$ bis $H_n$ assoziiert ermittelt werden.

So entspricht die Leitfähigkeit $L_1$ der Höhe des Sensors $H_1$, die Leitfähigkeit $L_2$ der Höhe $L_2$, die Leitfähigkeit $L_3$ der Höhe $H_3$ etc. Der Sensor wird bevorzugt an einem Lift geführt, wobei eine Höhe 0 mm des Liftes bedeutet, dass der Sensor nicht in Lösung getaucht ist und sich ausserhalb des Extraktionsgemisches befindet. Die unterste Liftposition ist die Position, die ein maximales Eintauchen des Sensors ermöglicht. Vorzugsweise ist die unterste Liftposition bzw. Gesamtlifthöhe 118 mm.

Vorzugsweise weist das Extraktionsgerät einen Absaugschlauch auf, der in einem definierten Abstand zum Sensor, und vorzugsweise 11 mm unterhalb des Sensors, geführt wird.

Dieser Abstand zwischen Sensor und Absaugschlauch ermöglicht das Rühren ohne Einschränkung durch den Sensor oder Absaugschlauch im Extraktionsgefäss.

Die Leitfähigkeit in der oberen Phase kann beispielsweise auf einer Liftposition ermittelt werden, die sich wie folgt ergeben kann:

[Lifthöhe total (z. B. 118mm) + Abstand Sensor zum Schlauch (z.B. 11mm) - Volumen Reaktionsgemisch * Volumenfaktor 0.8 - Verdünnung * Volumenfaktor 0.8 - Volumen Sole * Volumenfaktor 0.8 - 5mm] = $H_{OP}$ (Höhe obere Phase),

wobei der Verdünnungsfaktor und der Solefaktor optional sind.

Die Geschwindigkeiten $v_1$ bis $v_n$ können diskrete Geschwindigkeiten darstellen. Eine Geschwindigkeit grösser $v_n$, also vorzugsweise die vorangegangen Geschwindigkeit und besonders bevorzugt alle vorangegangenen Geschwindigkeiten kann beispielsweise 100 bis 250 mL/min betragen. $V_n$ kann dann beispielsweise 1 bis 20 mL/min betragen.

Schritt iii) des Verfahrens kann umfassen:

a) Ermitteln der Leitfähigkeit in der oberen Phase $L_o$,
b) Ermitteln der Leitfähigkeit in der unteren Phase $L_u$,
c) Bestimmung eines fiktiven Phasengrenzwertes $L_f$ gemäss [($L_u$-$L_o$)/Phasengrenzenfaktor] + $L_o$, wenn die hydrophile Phase die untere Phase ist oder Bestimmung des fiktiven Phasengrenzwertes $L_f$ gemäss [($L_o$-$L_u$) /Phasengrenzwertfaktor] + $L_u$, wenn die hydrophile Phase die obere Phase ist.

Der Phasengrenzenfaktor ist ein empirischer Wert, der die Empfindlichkeit des Systems wiedergibt. Je höher der Phasengrenzenfaktor gewählt wird, desto niedriger ist die Gefahr, dass die untere Phase mit abgesaugt wird. Kleinere Phasengrenzenfaktoren führen dazu, dass näher an der Phasengrenze abgesaugt wird, da der Sensor tiefer in die Lösung eintaucht. Vorzugsweise liegt der Wert bei 2 oder 4.

Der fiktive Phasengrenzwert kann als Phasengrenze definiert werden. Die Absaugung der oberen Phase erfolgt bevorzugt dann, wenn der Istwert des Leitfähigkeitsunterschied $\Delta L_{ist}$ zwischen der hydrophilen Phase und der hydrophoben Phase grösser als ein Sollwert des Leitfähigkeitsunterschieds $\Delta L_{soll}$ an der Phasengrenze ist. Wenn der Istwert grösser ist, kann eine besonders gute Phasentrennung angenommen werden.

Der Sollwert des Leitfähigkeitsunterschieds $\Delta L_{soll}$ liegt vorzugsweise im Bereich zwischen 0.01 mS/cm und 0.1 mS/cm, bevorzugt um 0.05 mS/cm, und kann mittels Software einstellbar sein.

Beispielsweise kann der Leitfähigkeitssensor in der oberen Phase auf einen ersten Abstand zur Phasengrenze abgesenkt werden und die Leitfähigkeit in der oberen Phase ermittelt werden. Im Anschluss kann der Leitfähigkeitssensor ganz nach unten in die untere Phase gesenkt werden und die Leitfähigkeit der unteren Phase ermitteln und/oder der Sensor wird auf einen zweiten Abstand zur Phasengrenze in die untere Phase gesenkt und ermittelt dort die Leitfähigkeit.

Je nach Füllstand im Gefäss und Position der Phasengrenze kann der erste Abstand und/oder der zweite Abstand 2 mm bis 10 mm, vorzugswiese 4 mm bis 7 mm und besonders bevorzugt 5 mm, zur Phasengrenze betragen.

Wenn in Schritt iii) der Sollwert des Leitfähigkeitsunterschieds $\Delta L_{soll}$ zwischen den Phasen unterschritten wird, kann ein Extraktionshilfsmittel, vorzugsweise Sole, hinzugegeben werden.

Ein zu geringer Leitfähigkeitsunterschied kann auf eine schlechte Phasentrennung hinweisen. Das Hinzufügen eines Extraktionshilfsmittels und erneutes Mischen sowie das Einräumen einer anschliessenden Ruhezeit zur Phasentrennung, kann die Phasentrennung verbessern. Üblicherweise wird eine bessere Phasentrennung durch Aussalzen, beispielsweise mit Sole, erreicht. Als Sole werden Salzlösungen mit mindestens 14 g gelöster Salze pro 1 kg Wasser verstanden. Beispiele für typische Salze zum Aussalzen sind: Natriumchlorid (NaCl), Ammoniumsulfat $(NH_4)_2SO_4$ oder Kaliumsulfat ($K_2SO_4$).

Nach dem Aussalzen kann der Leitfähigkeitsunterschied $\Delta L_{ist}$ gemäss Schritt iii) erneut ermittelt werden und bei ausreichend grossem Wert die Absaugung wie oben beschrieben erfolgen. Das Aussalzen kann für eine Optimierung des Ergebnisses ein- oder mehrmals wiederholt werden.

Ist der Istwert des Leitfähigkeitsunterschied $\Delta L_{ist}$ nach wie vor unter dem Sollwert des Leitfähigkeitsunterschieds $\Delta L_{soll}$, so kann dies auf eine Emulsion oder grosse Zwischenphase deuten. In diesem Fall kann der Sensor auf eine berechnete mittlere Höhe einer fiktiven unteren Phase gefahren werden. Diese errechnet sich bei Extraktionen mit leichterem Extraktionslösungsmittel beim ersten Extraktionsschritt beispielsweise (a) anhand des eingesetzten Probenvolumens und einem extraktionsgefässspezifischen Volumenfaktor bzw. bei den Folgeextraktionsschritten (b) anhand der letzten Absaughöhe:

(a) $H_{mittel}$ =([Unterste Liftposition]+[Abstand Leiftfähigkeitssensor zu Absaugschlauch] - [Probenvolumen]*[Volumenfaktor] )/2

(b): $H_{mittel}$ =([Unterste Liftposition]+[Abstand Leiftfähigkeitssensor zu Absaugschlauch] - [Liftposition letzte Absaugung]/2

Bei der Extraktion mit schwererem Extraktionslösungsmittel kann sich die mittlere Höhe beispielsweise anhand dessen Extraktionslösungsmittelvolumen (c) berechnen:

(c): $H_{mittel}$ = ([Unterste Liftposition]+[Abstand Leiftfähigkeitssensor zu Absaugschlauch] - [Extraktionslösungmittelvolumen]*[Volumenfaktor] )/2

Mittels eines Dosiermoduls kann die mögliche Emulsion oder grosse Zwischenphase langsam abgesaugt und wieder ausgestossen werden. Als Dosiermodule eignet sich z.B. OMNIS Dosing Modul der Firma Metrohm AG, Schweiz, falls die organische Phase leichter ist als die anorganische Phase; oder 800 Dosino der Firma Metrohm AG, Schweiz, falls die organische Phase schwerer ist als die anorganische Phase. Die Geschwindigkeit ist mittels Software einstellbar.

Ohne an eine Theorie gebunden zu sein, ist es möglich, dass das Aufsaugen und Ausstossen eine Friktion in den Schläuchen und der Bürette versursacht und dazu dienen kann, dass sich gebildete Schäume oder Emulsionen zerstören lassen und eine klare Phasengrenzen gebildet werden kann. Mit dem Dosing Modul kann erreicht werden, dass zunächst die leichtere Phase und dann die schwerere Phase ausgestossen wird, wodurch ein erneutes Durchmischen beim Ausstossen im Extraktionsgefäss verhindert werden kann. Im Falle des Dosino kann der Sensor beim Ausstossen auf eine theoretische Phasengrenze angehoben werden und zuerst die schwerere und anschliessend die leichter Phase ausgestossen werden. Danach kann Schritt iii) wiederholt werden.

Vorzugsweise wird die mindestens eine Geschwindigkeit $v_1$ in Abhängigkeit von $\Delta L_{ist}$ eingestellt. Je höher $\Delta L_{ist}$ ist, desto höher kann die Geschwindigkeit zum Absaugen sein.

Vorzugsweise wird die Geschwindigkeit $v_n$ in Abhängigkeit von $\Delta L_{ist}$ eingestellt. Je geringer $\Delta L_{ist}$ ist, desto geringer kann die Geschwindigkeit zum Absaugen sein.

Es kann, insbesondere nach Schritt iii), eine Detektion einer Zwischenphase erfolgen. Die Detektion der Zwischenphase kann die folgenden Schritte umfassen:

a) Bestimmen der Höhe $H_f$, die der Leitfähigkeit $L_f$ entspricht,
b) Ermitteln der Leitfähigkeit $L_{f-x}$ mit dem Leitfähigkeitssensor an der Position $H_{f-x}$,
c) Ermitteln der Leitfähigkeit $L_{f+y}$ mit dem Leitfähigkeitssensor an der Position $H_{f+y}$.
d) Ermitteln der Flüssigkeitshöhe $H_{Flüssig}$,
e) Ermitteln der Leitfähigkeit $L_{flüssig}$ an der Position $H_{flüssig}$,

f) Ermitteln der Leitfähigkeit $L_{unterst}$ am untersten Niveau.

Das Vorhandensein der Zwischenphase kann durch $L_{f+y} - L_{flüssig} \geqq \Delta L_{soll}$ und/oder $L_{unterst} - L_{f-x} \geqq \Delta L_{soll}$ indiziert werden.

Die Flüssigkeitshöhe entspricht der Höhe, die der Phasengrenze Flüssig/Luft entspricht. $H_{flüssig}$ ermittelt sich aus dem Extraktionsgemisch umfassend das Extraktionsgut, Extraktionsmittel, ggf. Extraktionshilfsmittel und ggf. Verdünnungsmittel.

Das unterste Niveau entspricht der untersten Liftposition und der maximalen Eintauchposition des Sensors in das Extraktionsgemisch. Vorzugsweise beträgt das unterste Niveau analog der untersten Liftposition 118 mm.

Die Höhe $H_f$ kann beispielsweise die Höhe der Phasengrenze sein. In diesem Fall kann die Höhe $H_{f-x}$ eine Höhe unterhalb der Phasengrenze kennzeichnen, beispielswiese eine Höhe 5 mm unterhalb der Phasengrenze. In diesem Fall wäre $H_{f-x} = H_{f-5mm}$. Die Höhe $H_{f+y}$ kann eine Höhe oberhalb der Phasengrenze kennzeichnen, beispielsweise eine Höhe 2 mm oberhalb der Phasengrenze. In diesem Fall wäre $H_{f+y} = H_{f+2mm}$. Selbstverständlich sind die Höhen je nach verwendeten Volumina einstellbar und können der jeweiligen Extraktion angepasst werden.Üblicherweise wird hierzu die Leitfähigkeit 2mm oberhalb der Phasengrenze und 3mm unterhalt des obersten Niveaus gewählt. Das oberste Niveau kann wie folgt ermittelt werden:

Flüssigkeitshöhe = [Unterste Liftposition]+[Abstand Leitfähigkeitssensor zu Absaugschlauch] – [Probenvolumen]*[Volumenfaktor] – [Extraktionslösungsmittelvolumen]*[Volumenfaktor] – [Verdünnungslösungsmittelvolumen]*[Volumenfaktor] – [Volumen Hilfslösungsmittel]*[Volumenfaktor].

Ist der Unterschied grösser als ein vordefiniert Wert, beispielsweise grösser als ein vordefinierter Wert zwischen 0.005 mS und 0.05 mS. wird von einer Zwischenphase ausgegangen. Beispielsweise kann der Unterschied grösser 0.05 mS betragen. Liegt in der oberen Phase keine Zwischenphase vor ($L_{f+y} - L_{flüssig} < \Delta L_{soll}$) wird die untere Phase analog überprüft. Dabei wird die Leitfähigkeit 2mm unterhalb der Phasengrenze und an der untersten Liftposition gemessen und analog ausgewertet. Werden die Messabstände zur Phasengrenze erhöht, so können kleine Zwischenphasen akzeptiert bzw. zugelassen werden.

Bei Vorhandensein der Zwischenphase kann ein Ansaugen und Ausstossen der Zwischenphase erfolgen. Durch das Ansaugen und Ausstossen der Zwischenphase wird diese durch die dadurch entstehende Friktion zerstört. Zwischenphasen können beispielsweise bei einer Extraktion von Saponinen, Tensiden oder auch Proteinen auftreten.

Vor einer Bestimmung der Phasengrenze kann jeweils ermittelt werden, ob der Sensor sauber ist bzw. kann die Reinheit des Sensors ermittelt werden und gegebenenfalls ein Reinigungsschritt des Sensors durchgeführt werden. Der automatisierte Reinigungsschritt verhindert Fehler bei der Extraktion aufgrund falsch angenommener Leitfähigkeitswerte. Dabei wird bei ausgefahrenem Lift die Leitfähigkeit in der Luft gemessen ($L_{Luft}$). Ist dieser Wert grösser als 0.005 mS, so deutet dies auf eine Verschmutzung hin. In diesem Fall kann das System den Sensor in eine Reinigungsposition fahren, diesen mit einem entsprechenden Lösungsmittel reinigen, durch Luftströmung trocknen und die Absaugschläuche mit einem geeigneten Priming Lösungsmittel z.B. Sole oder Wasser, spülen, um zu verhindern, dass Reinigungslösungsmittel ins System eingeschleppt werden. Danach kann die Phasengrenze bestimmt werden.

Vorzugsweise ist ein pH-Wert der hydrophilen Phase einstellbar. Beispielsweise kann durch Einstellen des pH-Wertes beeinflusst werden, welcher zu extrahierende Bestandteil extrahiert wird. Dies ermöglicht zudem, dass nach einer ersten Extraktion, der pH-Wert der wässrigen Lösung derart verändert werden kann, dass beispielsweise ein zweiter Bestandteil aus derselben wässrigen Lösung in einem zweiten Extraktionsschritt gemäss dem erfindungsgemässen Verfahren extrahiert werden kann. Es ist auch möglich, dass unerwünschte Substanzen, die mitextrahiert wurden, durch das Ändern des pH-Wertes wieder aus dem Extrakt herausgewaschen werden können.

Auf diese Weise lassen sich mehrere Extraktionen mit derselben Lösung durchführen. Dies ermöglicht wiederum besonders effiziente Extraktionen ohne Unterbruch.

Wenn die anorganische Phase, vorzugswiese die untere Phase, nicht weiter mit organischem Lösungsmittel extrahiert werden soll, sondern verworfen werden soll, wie dies z.B. bei einem Waschvorgang der Fall ist, so kann ein Restanteil von organischem Lösungsmittel, der durch den Meniskuseffekt der Oberflächenspannung zustande kommt, zuvor 2-mal mit einem kleinen Add-on-Volumen von z.B. 5 mL versetzt werden bzw. verdünnt werden, abgesaugt und gesammelt werden. Anschliessend kann die untere Phase verworfen werden.

Ein zweiter Aspekt der Erfindung betrifft ein Extraktionsgerät zur Durchführung eines Verfahrens wie vorhergehend beschrieben.

Ein solches Gerät zeichnet sich durch seine geringe Fehleranfälligkeit aus, ermöglicht eine effiziente und zeitsparende Extraktion im Vergleich zu manuellen Verfahren.

Vorzugweise weist das Extraktionsgerät einen Lift zum Führen des Leitfähigkeitssensors und eines Absaugschlauchs auf.

Das Extraktionsgerät kann einen pH-Meter umfassen. Derart lässt sich der pH-Wert innerhalb des Extraktionsguts ermitteln.

Ein dritter Aspekt der Erfindung betrifft ein Computerprogramm. Das Computerprogramm umfasst Befehle, die bewirken, dass das Extraktionsgerät wie vorhergehend beschrieben die Verfahrensschritte wie vorhergehend beschrieben ausführt.

Die Erfindung wird nachfolgend exemplarisch an den Figuren 1 und 2 und den Beispielen 1 bis 3 näher erläutert. Die Ausführungen sind dabei nicht einschränkend zu verstehen. Es zeigen:

Figur 1 Ein Flussdiagramm der einzelnen Schritte des erfindungsgemässen Verfahrens.

Figur 2 Das Absaugen der oberen Phase mit unterschiedlichen Geschwindigkeiten in einer schematischen Darstellung.

Figur 1 erläutert das Verfahren exemplarisch an einzelnen Verfahrensschritten. Im ersten Schritt 1 wird ein Extraktionsgerät bereitgestellt. Diesem Extraktionsgerät wird eine hydrophile, anorganische Phase 2 zugeführt, gefolgt von einem organischen Lösungsmittel 3 als hydrophobe, organische Phase. Die beiden Phasen werden unter Rühren 4 vermischt und nach einer Ruhezeit zur Phasentrennung wird in Schritt 5 ein Leitfähigkeitsunterschieds $\Delta L_{ist}$ zwischen der hydrophilen Phase und der hydrophoben Phase mittels eines Leitfähigkeitssensors ermittelt. Dazu wird der Leitfähigkeitssensor bis 5 mm über eine ermittelte Phasengrenze abgesenkt und die Leitfähigkeit in der oberen Phase gemessen. Anschliessend wird der Leitfähigkeitssensor vollständig in die untere Phase abgesenkt und eine Leitfähigkeit der unteren Phase gemessen. Ist der Leitfähigkeitsunterschied $\Delta L_{ist}$ grösser als der Sollwert $\Delta L_{soll}$ von 0.05 mS/cm, so wird in Schritt 6 die obere Phase zunächst mit 100 mL/min abgesaugt und anschliessend mit 20 ml/min (Figur 2).

Liegt $\Delta L_{ist}$ unter $\Delta L_{soll}$ von 0.05 mS/cm, ist die Phasentrennung nicht ausreichend und der Mischung wird gemäss Schritt 7 Sole hinzugefügt. Im Anschluss wird der Leitfähigkeitsunterschied gemäss Schritt 5 erneut ermittelt und, sofern $\Delta L_{ist} > \Delta L_{soll}$, erfolgt das Absaugen gemäss Schritt 6 mit zwei unterschiedlichen Geschwindigkeiten.

Alternativ ist es möglich, dass in Schritt 5 eine Zwischenphase indiziert wird. Dazu wird ein Leitfähigkeitswert 2 mm oberhalb der Phasengrenze ermittelt $L_{f+2mm}$ ($L_{f+y}$) und ein Leitfähigkeitswert 3 mm unterhalb des obersten Niveaus ermittelt $L_{flüssig}$. Ist die Leitfähigkeitsdifferenz < 0.05 mS/cm wird dieser Vorgang mit der unteren Phase durchgeführt. Dabei wird ein Leitfähigkeitswert 2 mm unterhalb der Phasengrenze ermittelt $L_{f-2mm}$ ($L_{f-y}$) und ein Leitfähigkeitswert an unterster Stelle ermittelt $L_{unterst}$. Ist die Leitfähigkeitsdifferenz in einem der beiden Fälle > 0.05 mS/cm ($\Delta L_{soll}$) wird die Zwischenphase indiziert und diese in Schritt 8 abgesaugt und wieder ausgestossen, um eine Phasentrennung zu ermöglichen. Anschliessend wird die Leitfähigkeit gemäss Schritt 5 erneut bestimmt und bei $\Delta L_{ist} > \Delta L_{soll}$ die obere Phase gemäss Schritt 6 abgesaugt.

Figur 2 zeigt schematisch den Absaugschritt 6 aus Figur 1 mit zwei unterschiedlichen Geschwindigkeiten. In Figur 2A wird die organische Phase 12 in einem Abstand a zur Phasengrenze 11 mit einer Geschwindigkeit von 100 mL/min über einen Absaugschlauch 17 abgesaugt. Anschliessend wird ein überstehender Rest 16 der organischen Phase 12 mit einer Geschwindigkeit von 20 mL/min abgesaugt, wie in Figur 2B schematisch dargestellt. Übrig bleibt die anorganische Phase 13 mit dem Meniskus 15 der oberen Phase 15. Diese kann durch zweimaliges Hinzufügen eines Add-on-Volumens von ca. 5 mL, was in etwa der Höhe des Phasenverlaufs 16 entsprechen würde, versetzt bzw. verdünnt werden und abgesaugt werden.

## BEISPIEL 1

Ein Reaktionsgemisch aus Essigsäurebenzylester, Benzylalkohol, Essigsäure, Schwefelsäure und Nebenprodukten wurde wie folgt extrahiert:

Das Reaktionsvolumen von 39 mL wurde in einem Gefäss des Extraktionsgeräts, ein Robotik System, mit 15 mL $H_2O$ verdünnt, mit 2 mL Sole als Extraktionsmittel versetzt und mit 25 mL Ethylacetat versetzt. Das Extraktionsgemisch wurde 10 sec lang mit Rührstärke 15 gemischt. Eine Phasentrennung erfolgte während 60 sec Wartezeit.

Zunächst wurde die Leitfähigkeit an der der Liftposition 0 mm ($L_{Luft}$) gemessen und ergab einen Leitfähigkeitswert von 0.0000 mS, was somit einen sauberen Sensor anzeigte.

Anschliessend wurde die Leitfähigkeit auf der Lifthöhe bzw. Liftposition von 79 mm gemessen. Die Liftposition ergab sich nach folgender Formel

```
(1)  [Lifthöhe total (118 mm) + Abstand Sensor zum Schlauch
     (11 mm) - Volumen Reaktionsgemisch 39 ml * Volumenfaktor
     0.8 - Verdünnung 15 ml * Volumenfaktor 0.8 - Sole 2 ml*
     Volumenfaktor 0.8 - 5 mm]: 0.009460586 mS.
```

Anschliessend wurde die Leitfähigkeit auf der Lifthöhe 118 mm gemessen: 2.036342 mS.

Der Leitfähigkeitsphasengrenzwert $L_f$ wurde errechnet: 0.516181 mS

Anschliessend wurde der Sensor auf die Lifthöhe 79 mm angehoben und langsam gesenkt bis die Leitfähigkeit von 0.516181 überschritten wurde. Die finale Lifthöhe wurde ermittelt und betrug 85 mm.

Der Lift wurde auf 67 mm (Phasengrenze 85 mm - Abstand Sensor zum Schlauch 11 mm - 2 mm) abgesenkt und die obere Phase mit 100 mL/min abgesaugt und in einem separaten Gefäss gesammelt.

Anschliessend wurde der Lift auf 72 mm (Phasengrenze 85 mm - Abstand Sensor zum Schlauch 11 mm - 7 mm) abgefahren und die Phase mit 20 mL/min abgesaugt und in einen separaten Gefäss gesammelt.

BEISPIEL 2

Die erste Extraktion erfolgte gemäss Beispiel 1.

Dem Rückstand wurden dann erneut 25 mL Ethylacatetat zugegeben. Das Extraktionsgemisch 10 sec mit einer Rührstärke von 15 gemischt. Die Phasentrennung erfolgt während einer Wartezeit von 60 Sekunden.

Die Leitfähigkeit wurde an der Liftposition 0 mm gemessen und ergab einen Wert von 0.07 mS. Der Sensor war verschmutz. Der Sensor wurde auf die Waschposition gefahren und mit 10 mL Aceton gespült und anschliessend bei laufendem Rührer 60 sec getrocknet. Die Schläuche wurden mit Sole gespült.

Anschliessend wurde die Leitfähigkeit auf der Lifthöhe 80 mm (85 mm aus erster Exttaktion - 5 mm) gemäss Formal (1) ermittelt: 0.0292257 mS. Anschliessend wurde die Leitfähigkeit auf der Lifthöhe 118 mm ermittelt: 1.776728 mS. Die Leitfähigkeit am Phasengrenzwert wurde mit 0.466101 mS errechnet.

Der Lift wurde auf 69 mm (Phasengrenze 87 mm - Abstand Sensor zum Schlauch 11 mm- 7 mm) abgefahren und die obere Phase mit 100 mL/min abgesaugt und in einem separaten Gefäss gesammelt. Danach wurde der Lift auf 74 mm (Phasengrenze 87 mm - Abstand Sensor zum Schlauch 11 mm - 2 mm) gesenkt und der Rest der oberen Phase mit 20 mL/min abgesaugt und in einem separaten Gefäss gesammelt.

Anschliessend wurden 2 x 5 mL Ethylacetat als Add-on Volumen zugegeben, abgesaugt und in einem separaten Gefäss gesammelt.

Anschliessend wurde die wässrige Phase abgesaugt und verworfen.

BEISPIEL 3

In Beispiel 3 wurden die Schritte gemäss Beispiel 1 und 2 durchgeführt und anschliessend gewaschen.

Die Ethylacetatphasen aus Beispiel 1 und 2 wurden in einem Extraktionsbecher vorgelegt und mit 15 mL $Na_2CO_3$ versetzt. Anschliessend wurde das Exttaktionsgemisch 10 sec mit Rührstärke 15 gemischt und die Phasentrennung während 60 sec abgewartet.

Zunächst wurde die Leitfähigkeit an der Liftposition 0 mm ($L_{Luft}$)gemessen (0.0007 mS), was keinen verschmutzen Sensor ergab.

Anschliessend wurde die Leitfähigkeit auf der Lifthöhe 112 mm gemessen (0.001934008 mS), die Leitfähigkeit auf der Lifthöhe 118 mm gemessen (0.7977153 mS) und der Phasengrenzwert ermittelt (0.200879 mS).

Der Sensor wurde auf die Lifthöhe 112 mm angehoben und langsam gesenkt bis die Leitfähigkeit von 0.200879 überschritten wurde.

Dies ergab eine finale Lifthöhe von 114 mm. Der Lift wurde auf 96 mm (Phasengrenze 114 mm -Abstand Sensor zum Schlauch 11 mm - 7 mm) gesenkt und die Phase mit 100 mL/min abgesaugt und gesammelt. Anschliessend wurde der Lift auf 101 mm (Phasengrenze 109 mm - Abstand Sensor zum Schlauch 11 mm - 2mm) gefahren und die Phase mit 20 ml/min abgesaugt und gesammelt.

Anschliessend werden 2 x 5 mL Ethylacetat als Add-on Volumen hinzugefügt, abgesaugt und gesammelt. Der Lift wird auf 118 mm abgesenkt und der pH-Wert ermittelt. Der pH-Wert betrug 7.8. Die wässrige Phase wurde abgesaugt und verworfen.

Die gesammelten Extrakte wurden im Extraktionsbecher vorgelegt und mit 15 mL Wasser versetzt. Anschliessend wurde das Extraktionsgemisch 10 sec mit Rührstärke 15 gemischt und die Phasentrennung während 60 sec abgewartet. Zunächst wurde die Leitfähigkeit an der Liftposition 0 mm gemessen (0.0007 mS), was keinen verschmutzen Sensor ergab. Anschliessend wurde die Leitfähigkeit auf der Lifthöhe 112 mm gemessen:

[Lifthöhe total 118 mm + Abstand Sensor zum Schlauch 11 mm - Volumen $H_2O$ 15 ml*Volumenfaktor 0.8 -5 mm]: 0.001134568 mS

Die Leitfähigkeit auf der Lifthöhe 118 mm wurde gemessen (0.045342 mS). Der Leitfähigkeitsunterschied war zu gering, so dass dem Extraktionsgemisch 2 mL Sole zugegeben wurden. Anschliessend wurde das Extraktionsgemisch erneut 10 sec mit Rührstärke 15 gemischt und die Phasentrennung während 60 sec abgewartet. Zunächst wurde die Leitfähigkeit an der Liftposition 0 mm erneut gemessen (0.0009 mS), was keinen verschmutzen Sensor ergab. Anschliessend wurde die Leitfähigkeit auf der Lifthöhe 110 mm gemessen:

[Lifthöhe total 118 mm + Abstand Sensor zum Schlauch 11 mm - Volumen $H_2O$ 15 ml*Volumenfaktor 0.8 - Sole 2 mL*Volumenfaktor 0.8-5 mm]: 0.001735 mS

Die Leitfähigkeit auf der Lifthöhe 118 mm wurde gemessen (1.667378 mS).

Der Leitfähigkeitsphasengrenzwert wurde mit 0.418146 mS ermittelt.

Der Sensor wurde auf die Lifthöhe 110 mm angehoben und langsam gesenkt bis die Leitfähigkeit von 0.418146 überschritten wurde. Dies ergab eine finale Lifthöhe von 113 mm. Der Lift wurde auf 95 mm (Phasengrenze 113 mm -Abstand Sensor zum Schlauch 11 mm - 7 mm) gesenkt und die Phase mit 100 mL/min abgesaugt und gesammelt. Anschliessend wurde der Lift auf 100 mm (Phasengrenze 109 mm - Abstand Sensor zum Schlauch 11 mm - 2 mm) gefahren und die Phase mit 20 ml/min abgesaugt und gesammelt.

Anschliessend werden 2 × 5 mL Ethylacetat als Add-on Volumen hinzugefügt, abgesaugt und gesammelt. Die wässrige Phase wurde verworfen.

## Patentansprüche

1. Verfahren zur automatisierten Flüssig-Flüssig-Extraktion, umfassend die Schritte:

   i) Bereitstellen eines Extraktionsgeräts,
   ii) Bereitstellen eines Gefässes mit einer hydrophilen Phase und einer hydrophoben Phase, wobei mindestens ein zu extrahierender Bestandteil in einer der beiden Phasen enthalten ist,
   iii) Ermitteln eines Leitfähigkeitsunterschieds $\Delta L_{ist}$ zwischen der hydrophilen Phase und der hydrophoben Phase mittels eines Leitfähigkeitssensors;

   **dadurch gekennzeichnet, dass** eine Absaugung der oberen Phase mit mindestens zwei unterschiedlichen Geschwindigkeiten $v_1$ bis $v_n$ erfolgt, wobei die letzte Geschwindigkeit $v_n$ langsamer ist als eine vorangegangene Geschwindigkeit $v_{n-1}$, vorzugsweise langsamer als $v_1$ bis $v_{n-1}$.

2. Verfahren nach Anspruch 1, wobei der Leitfähigkeitssensor derart durch die Phasen geführt wird, dass ermittelte Leitfähigkeiten $L_1$ bis $L_n$ mit Höhen des Sensors $H_1$ bis $H_n$ assoziiert ermittelt werden.

3. Verfahren nach einem der vorherigen Ansprüche, wobei die Geschwindigkeiten $v_1$ bis $v_n$ diskrete Geschwindigkeiten darstellen.

4. Verfahren nach einem der vorherigen Ansprüche, wobei Schritt iii) umfasst:

   a) Ermitteln der Leitfähigkeit in der oberen Phase $L_o$,
   b) Ermitteln der Leitfähigkeit in der unteren Phase $L_u$,
   c) Bestimmung eines fiktiven Phasengrenzwertes $L_f$ gemäss $[(L_u - L_o)/\text{Phasengrenzenfaktor}] + L_o$, wenn die hydrophile Phase die untere Phase ist oder Bestimmung des fiktiven Phasengrenzwertes $L_f$ gemäss $[(L_o-L_u)/\text{Phasengrenzwertfaktor}] + L_u$, wenn die hydrophile Phase die obere Phase ist.

**5.** Verfahren nach einem der vorherigen Ansprüche, wobei, wenn in Schritt iii) ein Sollwert des Leitfähigkeitsunterschieds $\Delta L_{soll}$ zwischen den Phasen unterschritten wird, ein Extraktionshilfsmittel, vorzugsweise Sole, hinzugegeben wird.

**6.** Verfahren nach einem der vorherigen Ansprüche, wobei $v_1$ in Abhängigkeit von $\Delta L_{ist}$ eingestellt wird.

**7.** Verfahren nach einem der vorherigen Ansprüche, wobei $v_n$ in Abhängigkeit $\Delta L_{ist}$ eingestellt wird.

**8.** Verfahren nach einem der vorherigen Ansprüche, wobei, insbesondere nach Schritt iii), eine Detektion einer Zwischenphase erfolgt, umfassend die Schritte:

a) Bestimmen der Höhe $H_f$, die der Leitfähigkeit $L_f$ entspricht,
b) Ermitteln der Leitfähigkeit $L_{f-x}$ mit dem Leitfähigkeitssensor an der Position $H_{f-x}$,
c) Ermitteln der Leitfähigkeit $L_{f+y}$ mit dem Leitfähigkeitssensor an der Position $H_{f+y}$,
d) Ermitteln der Flüssigkeitshöhe $H_{flüssig}$,
e) Ermitteln der Leitfähigkeit $L_{flüssig}$ an der Position $H_{flüssig}$,
f) Ermitteln der Leitfähigkeit $L_{unterst}$ am untersten Niveau, wobei das Vorhandensein der Zwischenphase durch $L_{f+y} - L_{flüssig} \geqq \Delta L_{soll}$ und/oder $L_{unterst} - L_{f-x} \geqq \Delta L_{soll}$ indiziert wird.

**9.** Verfahren nach Anspruch 8, wobei bei Vorhandensein der Zwischenphase ein Ansaugen und Ausstossen der Zwischenphase erfolgt.

**10.** Verfahren nach einem der vorherigen Ansprüche, wobei vor einer Bestimmung der Phasengrenze die Reinheit des Sensors ermittelt wird und gegebenenfalls ein Reinigungsschritt des Sensors durchgeführt wird.

**11.** Verfahren nach einem der vorherigen Ansprüche, wobei ein pH-Wert der hydrophilen Phase einstellbar ist.

**12.** Extraktionsgerät zur Durchführung eines Verfahrens nach einem der Ansprüche 1 bis 11.

**13.** Extraktionsgerät nach Anspruch 12 umfassend ein pH-Meter.

**14.** Computerprogramm, umfassend Befehle, die bewirken, dass das Extraktionsgerät nach Anspruch 12 oder 13 die Verfahrensschritte nach einem der Ansprüche 1 bis 11 ausführt.

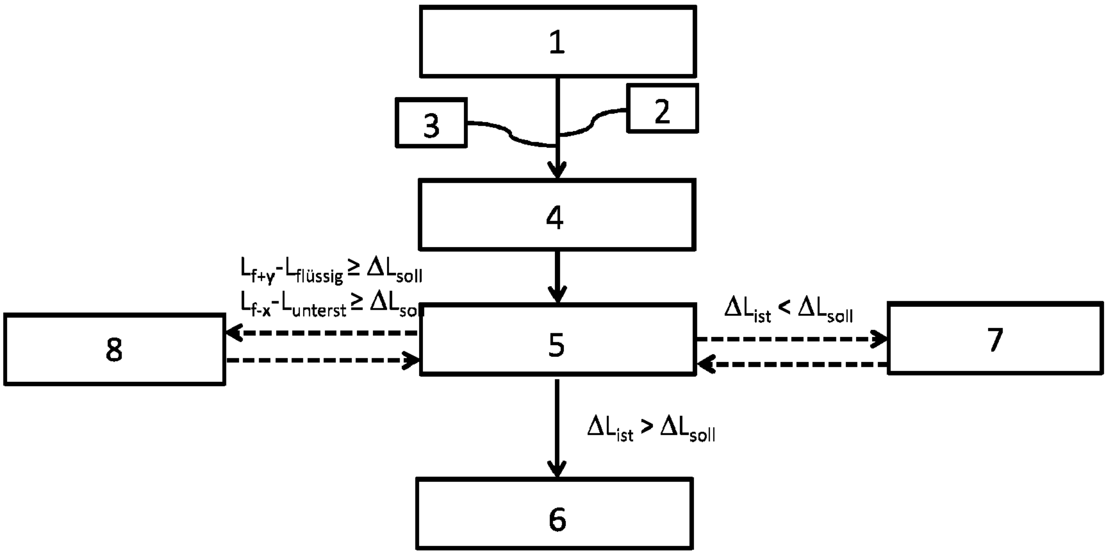
1
3
2
4
$L_{f+y}$-$L_{flüssig}$ ≥ $\Delta L_{soll}$
$L_{f-x}$-$L_{unterst}$ ≥ $\Delta L_{soll}$
$\Delta L_{ist}$ < $\Delta L_{soll}$
8
5
7
$\Delta L_{ist}$ > $\Delta L_{soll}$
6

Fig. 1

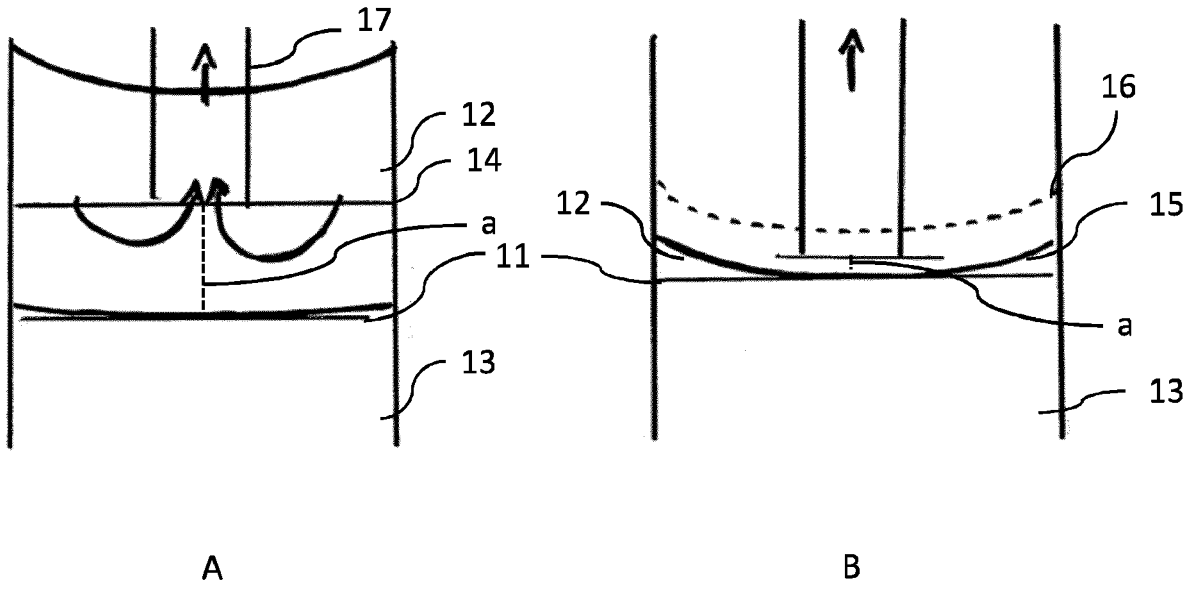


Fig. 2

Europäisches Patentamt
European Patent Office
Office européen des brevets

# EUROPÄISCHER RECHERCHENBERICHT

Nummer der Anmeldung
EP 21 20 3256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Aurora Biomed: "Automated Liquid-Liquid Extraction - Aurora Biomed's VERSA 1100", , 5. Dezember 2019 (2019-12-05), XP055921546, Gefunden im Internet: URL:https://www.youtube.com/watch?v=YaG9NASvQJA * Sek. 31-41 * ----- | 1-14 | INV. B01D11/04 |
| | | | RECHERCHIERTE SACHGEBIETE (IPC) |
| | | | B01D |

Der vorliegende Recherchenbericht wurde für alle Patentansprüche erstellt

1

| Recherchenort | Abschlußdatum der Recherche | Prüfer |
|---|---|---|
| München | 24. Mai 2022 | Cagnoli, Michele |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)